# EUROPEAN PATENT APPLICATION

(11) **EP 4 657 765 A1**
(43) Date of publication of application: **03.12.2025**
(21) Application number: 23918327.0
(22) Date of filing: 24.01.2023
(51) Int. Cl.: H04B 7/06, H04B 7/08

(54) **TERMINAL, WIRELESS COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); NAGATA, Satoshi, Tokyo 100-6150 (JP); MATSUMURA, Yuki, Tokyo 100-6150 (JP); SHIBAIKE, Naoya, Tokyo 100-6150 (JP); WANG, Xin, Beijing, 100190 (CN); WANG, Jing, Beijing, 100190 (CN); HOU, Xiaolin, Beijing, 100190 (CN); CHEN, Lan, Beijing, 100190 (CN)
(74) Representative: Hoffmann Eitle
(86) International application number: PCT/JP2023/002107
(87) International publication number: WO 2024/157358

(57) **Abstract**

A terminal according to one aspect of the present disclosure includes: a receiving section that receives information indicating the number of all beams, the number of layers, and the number of beams in each layer; and a control section that measures a synchronization signal block (SSB) corresponding to a set of a plurality of beams of each layer, and determines an index of a best beam, based on a measurement result. According to one aspect of the present disclosure, it is possible to perform determination of the best beam at high speed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a terminal (user terminal, User Equipment (UE)) uses a plurality of beams to receive a plurality of respective synchronization signals (SSBs) in each SSB transmission period. The plurality of SSBs have a plurality of respective SSB indices. A UE that has detected one SSB transmits a physical random access channel (PRACH) in a random access channel (RACH) occasion associated with the SSB index of the SSB.

However, when the number of beams is large, this causes the number of SSBs to be transmitted to be also large, and hence the time for SSB measurement and determination of the best beam by the UE may take long. Consequently, initial access may take long, which degrades communication throughput.

Thus, an object of the present disclosure is to provide a terminal, a radio communication method, and a base station that can perform determination of the best beam at high speed. Solution to Problem

A terminal according to one aspect of the present disclosure includes: a receiving section that receives information indicating the number of all beams, the number of layers, and the number of beams in each layer; and a control section that measures a synchronization signal block (SSB) corresponding to a set of a plurality of beams of each layer, and determines an index of a best beam, based on a measurement result.

### Advantageous Effects of Invention

According to one aspect of the present disclosure, it is possible to perform determination of the best beam at high speed.

### Brief Description of Drawings

[FIG. 1] FIG. 1A is a diagram to show an example of a beam detection method in existing NR. FIG. 1B is a diagram to show an example of a beam detection method with a plurality of stages.
FIG. 1C is a diagram to show an example of beam detection in a first embodiment.
[FIG. 2] FIG. 2 is a diagram to show an example that beam detection is expressed in the binary notation in the present embodiment.
[FIG. 3] FIG. 3 is a diagram to show a first example of beam detection in the present embodiment.
[FIG. 4] FIG. 4 is a diagram to show a second example of the beam detection in the present embodiment.
[FIG. 5] FIG. 5 is a diagram to show another example of mapping of SSB indices in each layer.
[FIG. 6] FIG. 6 is a diagram to show an example of mapping of beams and SSBs when some beams are not used.
[FIG. 7] FIG. 7 is a diagram to show comparison of the number of SSBs between existing NR and the first embodiment (proposal).
[FIG. 8] FIG. 8 is a diagram to show an SSB detection period in an embodiment.
[FIG. 9] FIG. 9 is a diagram to show an example of a procedure of processing between a terminal and a base station in aspect 2-1.
[FIG. 10] FIG. 10 is a diagram to show an example of a procedure of processing between a terminal and a base station in aspect 2-2.
[FIG. 11] FIG. 11 is a diagram to show an example of a procedure of processing between a terminal and a base station in aspect 2-3.
[FIG. 12] FIG. 12 is a diagram to show an example of processing in aspect 3-1.
[FIG. 13] FIG. 13 is a diagram to show an example of processing in aspect 3-2.
[FIG. 14] FIG. 14 is a diagram to show an example of a schematic structure of a radio communication system according to one embodiment.
[FIG. 15] FIG. 15 is a diagram to show an example of a structure of a base station according to one embodiment.
[FIG. 16] FIG. 16 is a diagram to show an example of a structure of a user terminal according to one embodiment.
[FIG. 17] FIG. 17 is a diagram to show an example of a hardware structure of the base station and the user terminal according to one embodiment.
[FIG. 18] FIG. 18 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): spatial reception parameter

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Initial Access Procedure)

In an initial access procedure, a UE (RRC_IDLE mode) performs reception of an SS/PBCH block (SSB), transmission of Msg1 (PRACH/random access preamble/preamble), reception of Msg2 (PDCCH, PDSCH including a random access response (RAR)), transmission of Msg3 (RAR, PUSCH scheduled by UL grant), and reception of Msg4 (PDCCH, PDSCH including UE contention resolution identity). Thereafter, upon transmission of ACK for Msg4 from the UE by a base station, an RRC connection is established (RRC_CONNECTED mode).

The reception of an SSB includes PSS detection, SSS detection, PBCH-DMRS detection, and PBCH reception. In the PSS detection, detection of part of a physical cell ID (PCI), detection (synchronization) of OFDM symbol timing, and (coarse) frequency synchronization are performed. The SSS detection includes detection of a physical cell ID. The PBCH-DMRS detection includes detection of (part of) an SSB index in a half radio frame (5 ms). The PBCH reception includes detection of a system frame number (SFN) and radio frame timing (SSB index), reception of configuration information for remaining minimum system information (RMSI, SIB1) reception, and recognition of whether or not the UE can camp on a corresponding cell (carrier).

An SSB has a bandwidth of 20 RBs and four symbols. An SSB transmission period can be configured from {5, 10, 20, 40, 80, 160} ms. In a half frame, a plurality of SSB symbol positions are defined, based on a frequency range (FR1, FR2)

A PBCH has payload of 56 bits. N repetitions of a PBCH are transmitted in a period of 80 ms. N depends on the SSB transmission period.

System information includes an MIB carried on the PBCH, RMSI (SIB1), and other system information (OSI). SIB1 includes a RACH configuration and information for performing a RACH procedure. The relationship of time/frequency resources between an SSB and a PDCCH monitoring resource for SIB1 is configured by the PBCH.

A base station using beam correspondence uses a plurality of beams to transmit a plurality of respective SSBs in each SSB transmission period. The plurality of SSBs have a plurality of respective SSB indices. A UE that has detected one SSB transmits a PRACH in a RACH occasion associated with the SSB index of the SSB and receives a RAR in a RAR window.

However, when the number of beams is large, this causes the number of SSBs to be transmitted to be also large, and hence the time for SSB measurement and determination of the best beam by the UE may take long. Consequently, initial access may take long, which degrades communication throughput.

Thus, inventors of the present invention came up with the idea of a terminal that can perform determination of the best beam at high speed.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "notify," "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information," "one or a plurality of pieces of spatial relation information," and the like. The TCI state and the TCI may be interchangeably interpreted.

In the present disclosure, a beam and a beam index may be interchangeably interpreted. In the present disclosure, an SSB, and an SSB index may be interchangeably interpreted. In the present disclosure, SSBs/beams are transmitted in different times by using time division multiplexing (TDM), but may be transmitted at the same time by using spatial domain multiplexing (SDM) or frequency domain multiplexing (FDM). In the present disclosure, an SSB is used as a reference signal, but another reference signal (for example, a channel state information reference signal (CSI-RS)) may be used. In other words, an SSB may be interpreted as a CSI-RS and the like. In the present disclosure, a RACH, a PRACH, a RACH preamble, and a RA preamble may be interchangeably interpreted. In the present disclosure, an RSRP and an SINR may be interchangeably interpreted. In the present disclosure, a layer, a level, a stage, a depth, and the like may be interchangeably interpreted.

### (Radio Communication Method)

### <First Embodiment>

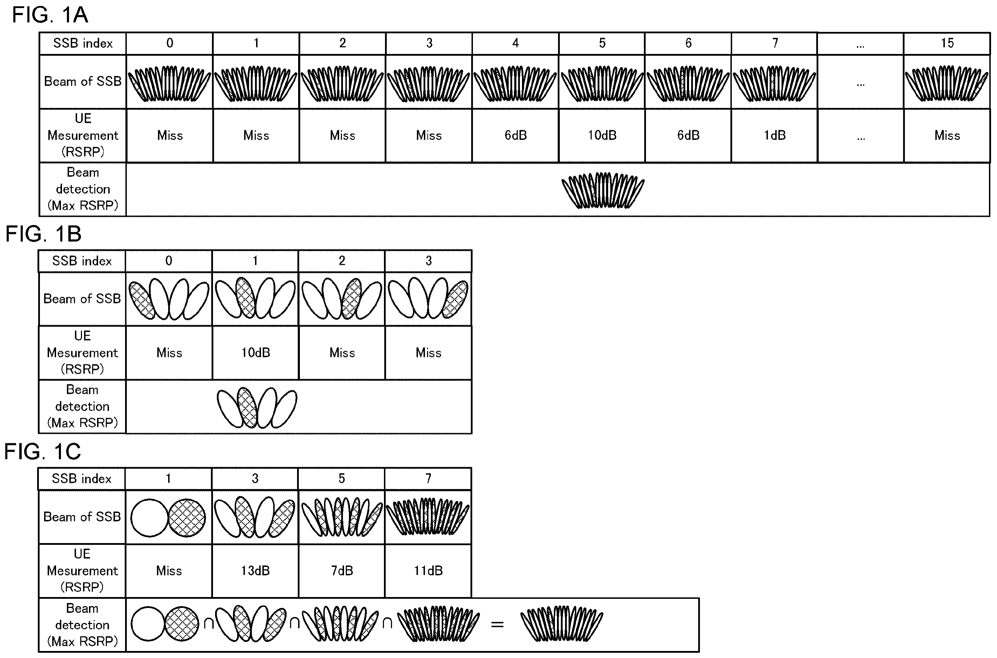

A description will be given of a method of using a small number of SSBs to find a beam that is the best for initial access and data transmission in SSBs in one burst by detection algorithm. In the present embodiment, SSBs corresponding to respective sets of a plurality of beams of each layer (for example, FIG. 1C, FIG. 2, and FIG. 3) are measured, and the index of the best beam is determined based on a measurement result (for example, Reference Signal Received Power (RSRP) or Signal to Interference plus Noise Ratio (SINR)). A UE then transmits (reports) a PRACH corresponding to the index of the best beam to a gNB.

FIG. 1A is a diagram to show an example of a beam detection method in existing NR. In the example in FIG. 1A, one SSB corresponds to each beam (narrow beam). A UE measures each SSB to determine the beam corresponding to an SSB with the highest RSRP, as the best beam. In the example in FIG. 1A, the UE determines the beam corresponding to SSB index = 5, as the best beam.

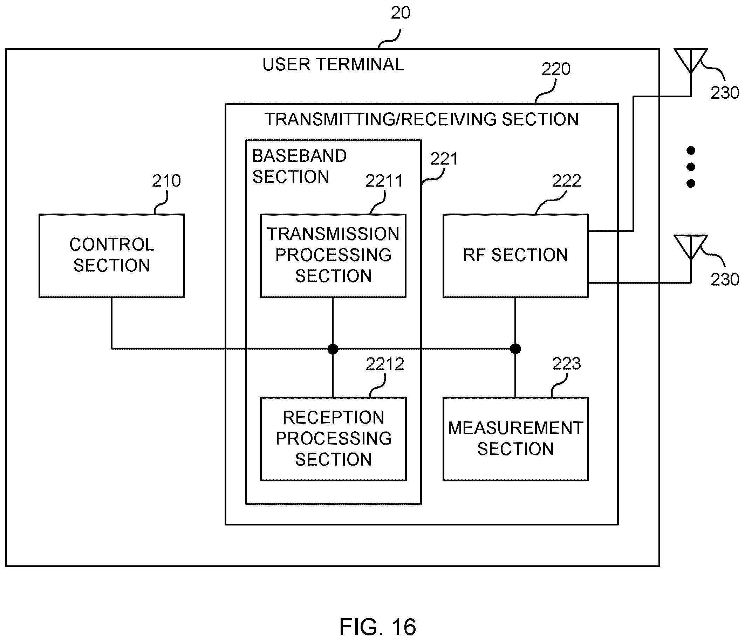

FIG. 1B is a diagram to show an example of a beam detection method with a plurality of stages. In the example in FIG. 1B, 16 beams are divided into four wide beams. Each wide beam is a beam obtained by combining four individual narrow beams, and a specific RS (SSB) is configured for a UE for beam refinement in a connected mode. In this example, one SSB corresponds to each wide beam. A UE measures each SSB to determine the wide beam corresponding to an SSB with the highest RSRP, as the best beam. In the example in FIG. 1B, the UE determines the beam corresponding to SSB index = 1, as the optimal beam.

FIG. 1C is a diagram to show an example of beam detection in a first embodiment. SSB index = 1 in FIG. 1C corresponds to the second beam when 16 beams are divided into two wide beams. SSB index = 3 corresponds to the second and fourth beams when the 16 beams are divided into four wide beams. SSB index = 5 corresponds to the second, fourth, sixth, and eighth beams when the 16 beams are divided into eight wide beams. SSB index = 7 corresponds to the second, fourth, sixth, eighth, tenth, twelfth, fourteenth, and sixteenth beams of the 16 beams. In other words, in an example of the present embodiment, a plurality of wide beams/plurality of narrow beams are simultaneously transmitted, and one SSB corresponds to the plurality of wide beams/plurality of narrow beams.

In the example in FIG. 1C, assume that the wide beam corresponding to SSB index = 1 has an RSRP lower than that of the other wide beam (the first beam when the 16 beams are divided into two wide beams) or a threshold. Also assume that the wide beams corresponding to SSB index = 3 have an RSRP higher than that of the other wide beams (the first and third beam when the 16 beams are divided into four wide beams) or a threshold. Assume that the wide beams corresponding to SSB index = 5 have an RSRP lower than that of the other wide beams (the first, third, fifth, and seventh beams of the 16 beams) or a threshold. Assume that the wide beams corresponding to SSB index = 7 have an RSRP higher than that of the other wide beams (the first, third, fifth, seventh, ninth, eleventh, thirteenth, and fifteenth beams of the 16 beams) or a threshold.

From this result, the UE judges that the best beam is present among the first beam when the 16 beams are divided into two wide beams, the second and fourth beams when the 16 beams are divided into four wide beams, the first, third, fifth, and seventh beams when the 16 beams are divided into eight wide beams, and the second, fourth, sixth, eighth, tenth, twelfth, fourteenth, and sixteenth beams of the 16 beams. Then, the UE determines that the sixth beam of the 16 beams is the best beam.

Note that, in the present disclosure, transmitting both the SSBs corresponding to the beams (narrow beams) in FIG. 1A and the SSBs corresponding to the wide beams/plurality of beams in FIG. 1C will be referred to as hybrid SSB transmission in some cases.

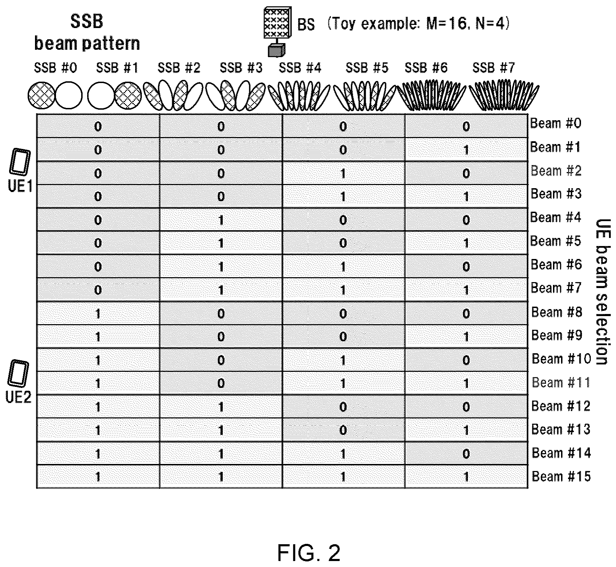

FIG. 2 is a diagram to show an example that beam detection is expressed in the binary notation in the present embodiment. In the table in FIG. 2, each beam (each of Beams #0 to #15) corresponds to four digits of binary numbers. In the first row, 0 is set when the RSRP of the wide beam corresponding to SSB #0 is high, and 1 is set when the RSRP of the wide beam corresponding to SSB #1 is high. Note that "the RSRP of a beam is high" may mean "the RSRP is higher than the RSRP of the other beam" or "the RSRP is higher than a threshold".

Similarly, in the second row, 0 is set when the RSRP of the wide beam corresponding to SSB #2 is high, and 1 is set when the RSRP of the wide beam corresponding to SSB #3 is high. In the third row, 0 is set when the RSRP of the wide beams corresponding to SSB #4 is high, and 1 is set when the RSRP of the wide beams corresponding to SSB #5 is high. In the fourth row, 0 is set when the RSRP of the wide beams corresponding to SSB #6 is high, and 1 is set when the RSRP of the wide beams corresponding to SSB #7 is high.

For example, in a case of the RSRP of SSB #0 > the RSRP of SSB #1, the RSRP of SSB #2 > the RSRP of SSB #3, the RSRP of SSB #4 > the RSRP of SSB #5, and the RSRP of SSB #6 > the RSRP of SSB #7, the UE determines that Beam #2 corresponding to [0010] is the best beam.

For example, in a case of the RSRP of SSB #0 < the RSRP of SSB #1, the RSRP of SSB #2 > the RSRP of SSB #3, the RSRP of SSB #4 > the RSRP of SSB #5, and the RSRP of SSB #6 < the RSRP of SSB #7, the UE determines that Beam #11 corresponding to [1011] is the best beam.

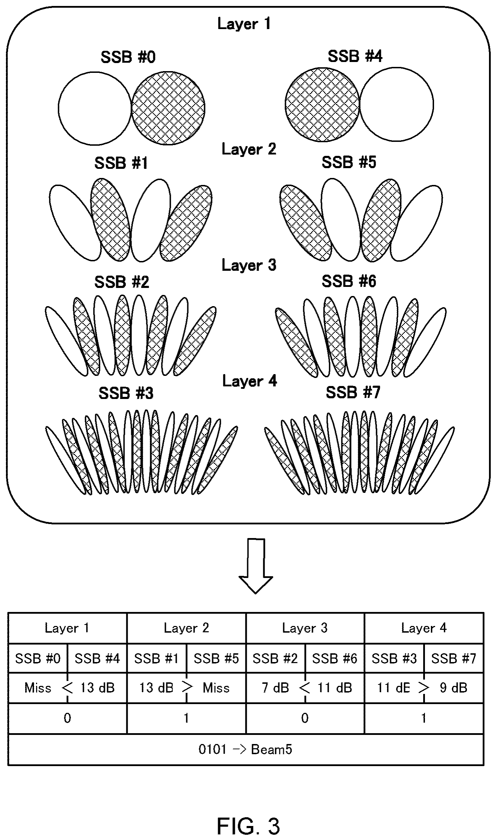

FIG. 3 is a diagram to show a first example of beam detection in the present embodiment. In the example in FIG. 3, a detection method is similar to those of the examples in FIG. 1C and FIG. 2, but the order of assigning SSB indices is partially different from those of the examples in FIG. 1C and FIG. 2. A UE compares, in each layer, the RSRPs of SSBs in the layer. The UE compares the RSRPs of SSBs #0 and #4 in layer 1, compares the RSRPs of SSBs #1 and #5 in layer 2, compares the RSRPs of SSBs #2 and #6 in layer 3, and compares the RSRPs of SSBs #3 and #7 in layer 4. Then, as shown in FIG. 3, the UE obtains "0101" as a measurement result and obtains, from the table in FIG. 2, that Beam #5 is the best beam.

The UE may transmit, in each layer, a random access preamble in a random access channel (RACH) resource corresponding to the SSB with a high RSRP (corresponding one of SSBs #1, #3, #4, and #6). By assuming that all the preambles are transmitted from one UE, a base station (gNB) can know that the UE has determined SSBs #1, #3, #4, and #6, based on the random access preambles corresponding to the SSBs. Consequently, the base station can determine Beam #5 as the best beam.

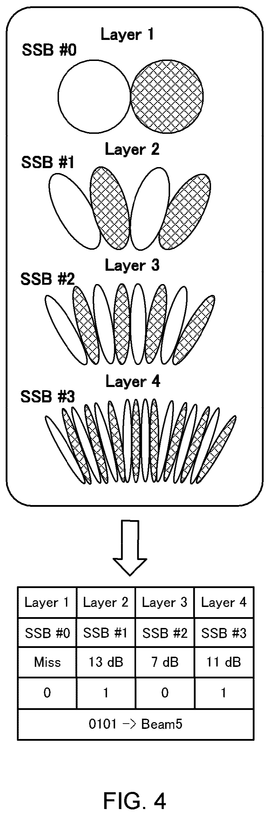

FIG. 4 is a diagram to show a second example of beam detection in the present embodiment. The example in FIG. 4 is different from the example in FIG. 3 in that the RSRP of the SSB of each layer is compared with a threshold. Assume that the threshold is 10 dB. The UE compares the RSRP of the SSB of each layer with the threshold and judges that the RSRPs of SSBs #1 and #3 are higher than the threshold. 1 is set for each SSB with an RSRP equal to or higher than the threshold, and 0 is set for each SSB with an RSRP lower than the threshold, to thereby obtain "0101" as a measurement result. Then, the UE determines, from the table in FIG. 2, that Beam #5 is the best beam.

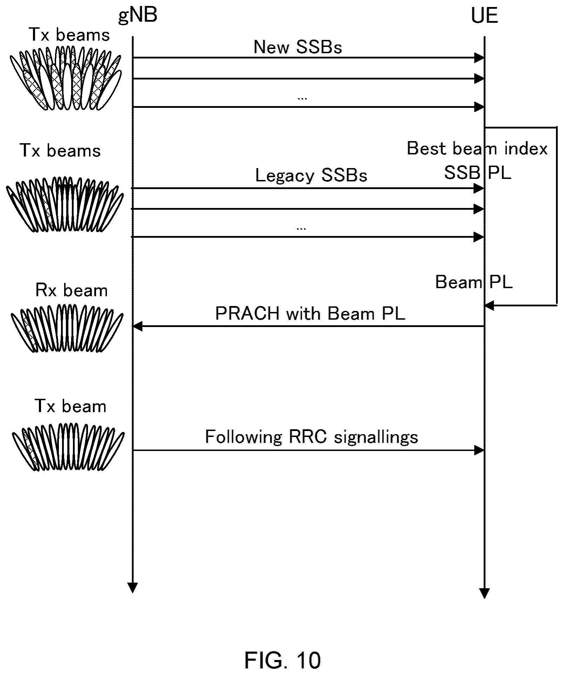

The threshold may be, for example, a value obtained by subtracting a certain value from the highest RSRP among the RSRPs of the respective layers (respective SSBs). In the example in FIG. 4, 10 dB obtained by subtracting a certain value 3 dB from the highest RSRP (13 dB) is used as the threshold. The certain value may be configured for/indicated to the UE by higher layer signaling/physical layer signaling. Alternatively, the threshold may be configured for/indicated to the UE by higher layer signaling/physical layer signaling, without using the certain value.

The UE may transmit a random access preamble in each of the RACH resources corresponding to SSBs #1 and #3, each of which has an RSRP higher than the threshold. Similarly to the example in FIG. 3, by assuming that all the preambles are transmitted from one UE, a base station (gNB) can know that the UE has determined SSBs #1 and #3, based on the random access preambles corresponding to the SSBs. Consequently, the base station can determine Beam #5 as the best beam.

### {Another Example of SSB Mapping}

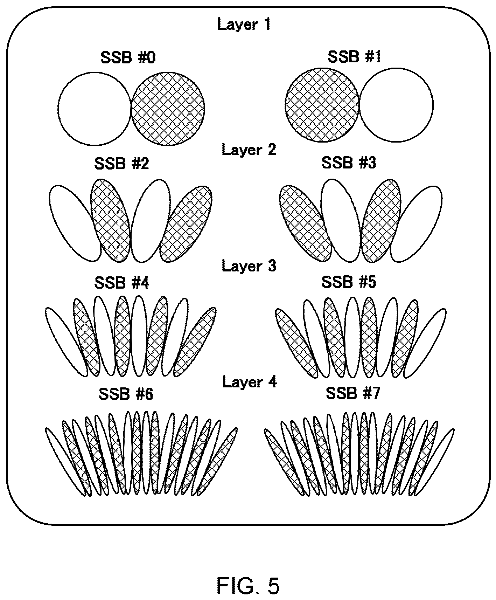

FIG. 5 is a diagram to show another example of mapping of SSB indices in each layer. In the example in FIG. 5, different from the example in FIG. 3, SSBs #0 and #1 are mapped to beams in layer 1, SSBs #2 and #3 are mapped to beams in layer 2, SSBs #4 and #5 are mapped to beams in layer 3, and SSBs #6 and #7 are mapped to beams in layer 4. The mapping in FIG. 3 may be referred to as Depth-first mapping, and the mapping in FIG. 5 may be referred to as Width-first mapping.

### {Adjustment of the Number of Beams}

A UE may be configured/indicated, by a gNB, with the maximum number of beams supported and the like, by higher layer signaling/physical layer signaling. The UE may receive M and K, or L and K. M denotes the number of all beams, L denotes the number of layers (depths/stages), and K denotes the number of beams (the number of beams to be measured) in each layer. L is determined based on the number of beams corresponding to one SSB. For example, in the examples in FIGS. 3 to 5, a layer with the number of beams corresponding to one SSB being two is layer 1, a layer with the number of beams corresponding to one SSB being four is layer 2, a layer with the number of beams corresponding to one SSB being eight is layer 3, and a layer with the number of beams corresponding to one SSB being 16 is layer 4.

### <<Option 1>>

One or some beams (SSBs) of a plurality of beams may be muted. Since a UE cannot detect a muted SSB and hence cannot detect a corresponding beam, UE operation may be similar to an existing method.

### <<Option 2>>

A gNB may map any beam index as a disabled beam. In this case, as in option 1, UE operation, as a UE, may be similar to an existing method.

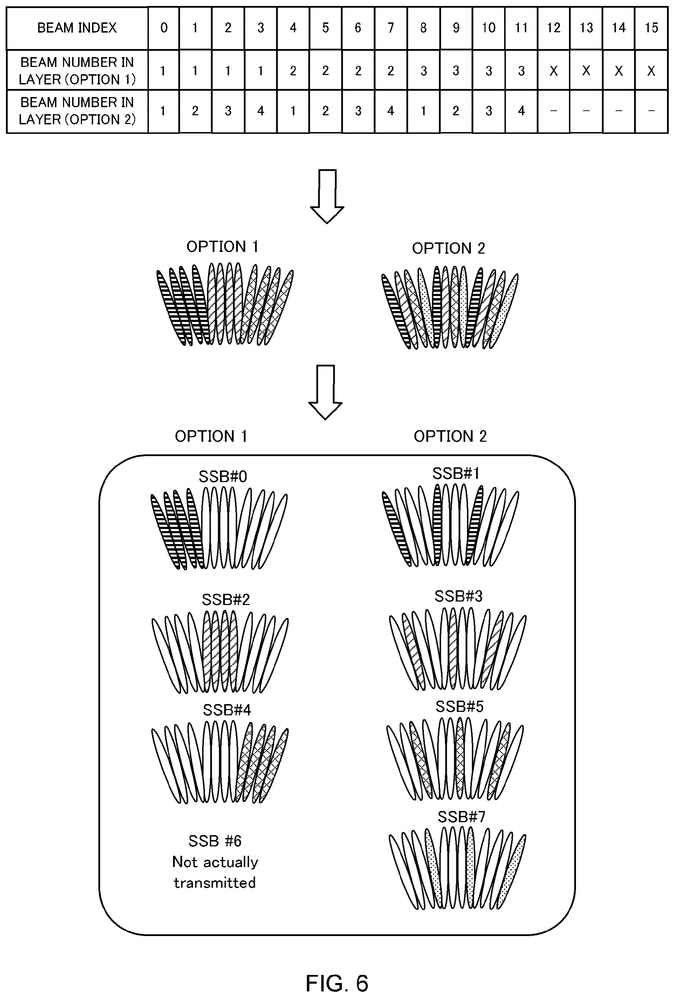

FIG. 6 is a diagram to show an example of mapping of beams and SSBs when some beams are not used. In the example in FIG. 6, it is assumed that four SSBs are associated with 16 narrow beams. In option 1, since four beams of the 16 narrow beams are muted, three SSBs are associated with twelve narrow beams. In option 2, since four SSBs are associated with twelve narrow beams, the number of SSBs is large while the number of beams associated with one SSB is small, compared with those in option 1.

### {Implementation Result and Effects}

As in the first embodiment, a base station (BS) transmits synchronization signal blocks (SSBs) in a beam pattern defined in advance, to transmit beam indices subjected to logarithmic compress. A UE can detect a best-beam index, based on a received SSB sequence. For example, assume that the number of beams is denoted by M, and the number of SSBs is denoted by N. In this case, N = 2log₂M holds.

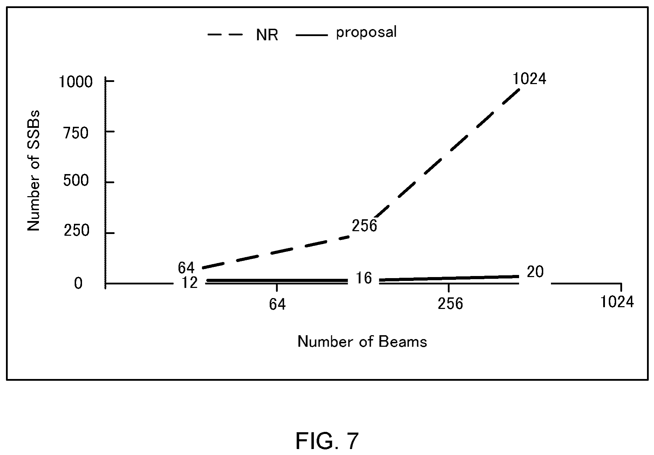

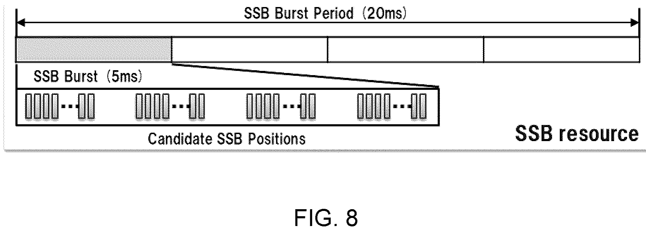

FIG. 7 is a diagram to show comparison of the number of SSBs between existing NR and the first embodiment (proposal). In the existing NR, the number of SSBs increases according to the number of beams. In the first embodiment (proposal), since N = 2log₂M holds as described above, the number of SSBs can be suppressed compared with that in the existing NR as shown in FIG. 7. For example, even when 1024 beams are transmitted, since a gNB transmits only 20 SSBs, the gNB can transmit the SSBs in 5 ms of an SSB period of 20 ms as shown in FIG. 8.

### <Second Embodiment>

In a second embodiment, a procedure of processing between a terminal (UE) and a base station (gNB) using any of the beam detection methods of the first embodiment will be described concretely. Note that a new SSB in the present embodiment indicates an SSB corresponding to a wide beam(s)/plurality of narrow beams described in the first embodiment.

### {Aspect 2-1}

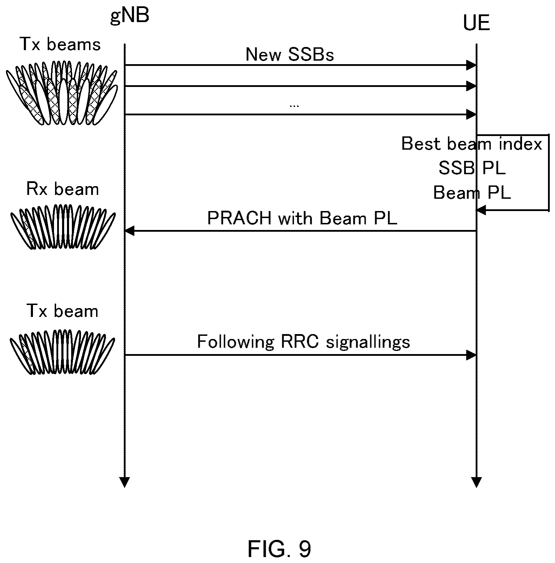

FIG. 9 is a diagram to show an example of a procedure of processing between a terminal and a base station in aspect 2-1. The base station (gNB) transmits new SSBs to the terminal (UE). Th UE uses any of the methods described in the first embodiment, based on the received new SSBs, to determine the best beam (beam index) and also detect the pathloss (PL) of the SSB and the pathloss (PL) of the beam.

The UE then uses the determined beam (PL of the determined beam) to transmit a PRACH corresponding to the determined beam (SSB corresponding to the beam) to the gNB. Consequently, the gNB can know the best beam determined by the UE. The gNB uses the best beam to transmit RRC signaling and the like to the UE.

According to this aspect, the best beam is determined based on new SSBs of the first embodiment, the best beam can be determined more efficiently with a small number of SSBs and a small number of measurements.

### {Aspect 2-2}

FIG. 10 is a diagram to show an example of a procedure of processing between a terminal and a base station in aspect 2-2. The base station (gNB) transmits new SSBs to the terminal (UE). Th UE uses any of the methods described in the first embodiment, based on the received new SSBs, to determine the best beam (beam index) and also determine the pathloss (PL) of the SSB. At this point, there is a possibility that the UE has no accurate idea about the channel environment of each narrow beam, and in such a case, the UE does not know the PL of the beam and an appropriate transmission power for transmission of a PRACH. Hence, the UE receives Legacy SSBs from the gNB. A legacy SSB is an SSB corresponding to each narrow beam as shown in FIG. 1A. With this, the UE can determine the channel environment (for example, the pathloss) of the best beam. SSB transmission of this aspect corresponds to hybrid SSB transmission described above.

The UE then uses the determined beam (PL of the determined beam) to transmit a PRACH corresponding to the determined SSB to the gNB. Consequently, the gNB can know the best beam determined by the UE. The gNB uses the best beam to transmit RRC signaling and the like to the UE.

According to this aspect, a UE can determine the channel environment (for example, the pathloss) of the best beam even when the UE has no accurate idea about the channel environment of each narrow beam.

### {Aspect 2-3}

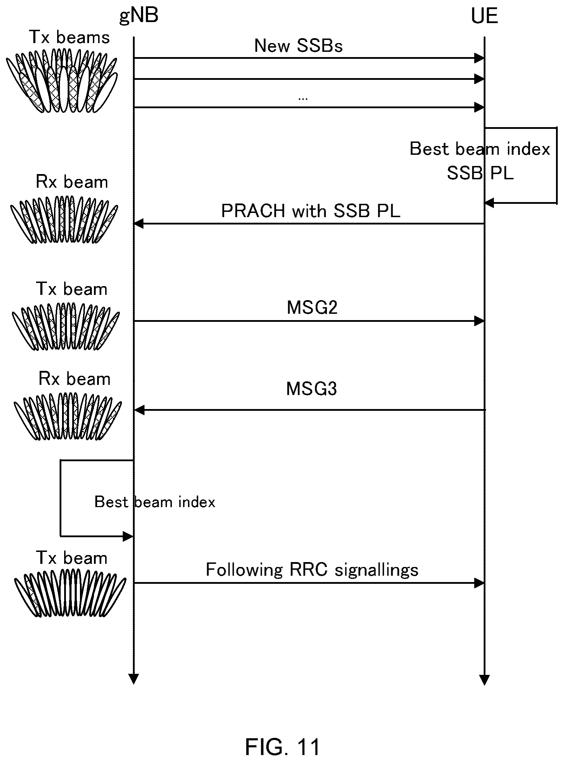

FIG. 11 is a diagram to show an example of a procedure of processing between a terminal and a base station in aspect 2-3. The base station (gNB) transmits new SSBs (or legacy SSBs) to the terminal (UE). Th UE uses any of the methods described in the first embodiment to determine the best beam (or a list of RSRPs of the SSBs) and also determine the pathloss (PL) of the SSB, based on the received SSBs. At this point, the UE has no accurate idea about the channel environment of each narrow beam, and in such a case, the UE does not know the PL of the beam and an appropriate transmission power for transmission of a PRACH. Hence, the UE uses the wide beam/plurality of beams corresponding to the new SSB (based on the pathloss of the SSB) to transmit a PRACH.

The UE then uses the wide beam/plurality of beams corresponding to the new SSB to receive message 2 and transmit message 3. The UE may transmit the index of the best beam or the list of the RSRPs of the SSBs together with message 3. Then, when the gNB has received the list of the RSRPs of the SSBs together with MSG3, the gNB determines the best beam, based on the list. The gNB uses the best beam determined (or notified by the UE) to transmit RRC signaling and the like to the UE.

According to this aspect, even when a UE has no accurate idea about the channel environment of each narrow beam and has not received legacy SSBs as in aspect 2-2, the UE can notify a base station of the best beam.

### <Third Embodiment>

The following two aspects are conceivable for alignment of beams used by a gNB and a UE for communication.

### {Aspect 3-1}

In aspect 3-1, a UE detects and reports the index of the best beam. In this case, a gNB configures/indicates an SSB transmission scheme by higher layer signaling/physical layer signaling or the like, and the UE detects and reports the index of the best beam in a RACH procedure, based on the configuration/indication. The SSB transmission scheme may be defined in a specification. This example corresponds to examples of aspects 2-1 to 2-3 (excluding an example that a UE transmits a list of RSRPs of SSBs in aspect 3) of the second embodiment.

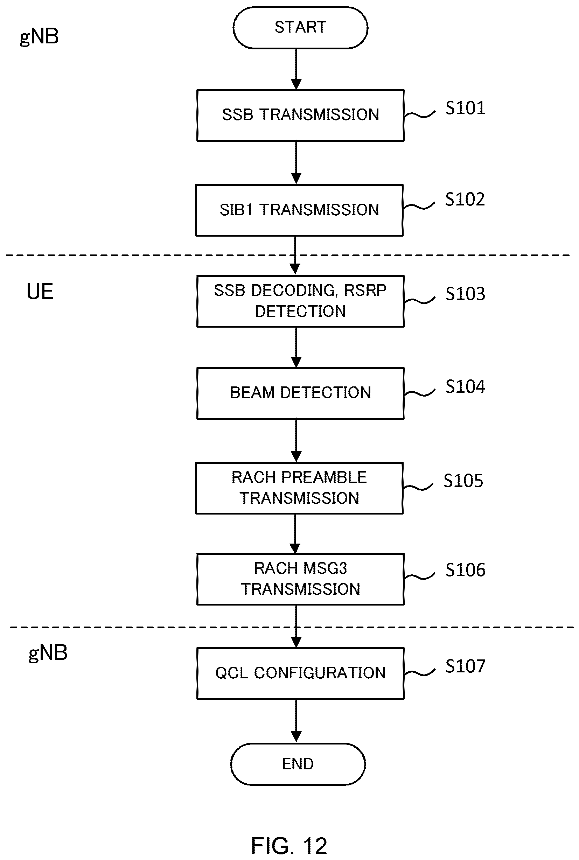

Processing of aspect 3-1 will be described concretely by using FIG. 12. The gNB uses the examples of the first embodiment (for example, FIG. 1C and FIG. 2 to FIG. 4) to transmit SSBs each corresponding to a wide beam(s)/a plurality of narrow beams to the UE (S101). The gNB configures/indicates a scheme of transmitting the SSBs and parameters (K and M, or L and K) corresponding to the scheme, for/to the UE by a Master Information Block (MIB)/System Information Block 1 (SIB1) (S102). K, M, and L will be described later.

The UE monitors at least one SSB burst, decodes as many SSBs as possible, and measures RSRPs (S103). By decoding such many SSBs and measuring RSRPs, the UE can find the best beam highly accurately. Th UE then uses any of the methods described in the first embodiment to detect (determine) the index of the best beam (S104).

The UE transmits a RACH preamble to the gNB (S105). For S105, any of the following three options may be applied.

### {Option 1}

A PRACH resource is associated with a beam index instead of an SSB index. The UE transmits the RACH preamble in the resource having the determined index of the best beam.

### {Option 2}

The UE simultaneously transmits a plurality of preambles in PRACH resources associated with a plurality of detected SSBs. The plurality of SSBs may include SSBs corresponding to narrow beams and SSBs corresponding to wide beams. In this option, the gNB assumes the same (specific) preamble from the same UE. When a plurality of UEs select one preamble, collision occurs. To reduce such collision, enhancement of a preamble space is conceivable.

### {Option 3}

The UE transmits (reports) the beam index in MSG3 to be described later, without transmitting the beam index on a RACH.

The UE transmits RACH MSG3 (S106). When option 3 is applied in S105, the UE transmits the index of the best beam detected in S104, in RACH MSG3.

The gNB configures QCL for the UE (S107). For S107, either of the following two options may be applied.

### {Option 1}

The gNB configures one SSB as a QCL source RS.

### {Option 2}

The gNB configures beam indices or a set of SSBs as one QCL source instead of the index of one SSB. A measurement value corresponding to the set of beams or SSBs may be added.

### {Aspect 3-2}

A UE transmits a list of measurement results (for example, RSRPs/SINRs) of a plurality off SSBs to a gNB. The gNB determines the index of the best beam, based on the received measurement result. In this case, the gNB configures/indicates, for/to the UE, to report the SSB measurement result list in an SSB burst, by higher layer signaling/physical layer signaling in advance. The UE transmits an SSB detection result, based on the configuration/indication. This example corresponds to the example that a UE transmits a list of RSRPs of SSBs in aspect 3 of the second embodiment. Each RSRP may be an RSRP measured from an SSB corresponding to a wide beam(s)/plurality of beams.

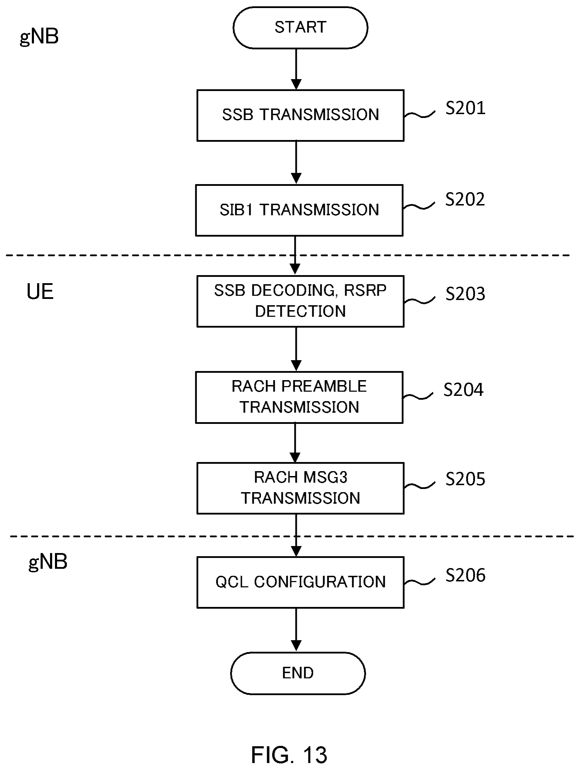

Processing of aspect 3-2 will be described concretely by using FIG. 13. The gNB uses the examples of the first embodiment (for example, FIG. 1C and FIG. 2 to FIG. 4) to transmit SSBs each corresponding to a wide beam(s)/a plurality of narrow beams to the UE (S201). The gNB may configure/indicate a scheme of transmitting the SSBs for/to the UE by an MIB. The gNB then transmits SIB1 to the UE (S202).

The UE monitors at least one SSB burst, decodes as many SSBs as possible, and detects RSRPs (S203).

The UE transmits a RACH preamble to the gNB (S204). The UE then transmits RACH MSG3 (S205). The UE may transmit a list of SSBs for which decoding has been successful and the RSRPs of the SSBs (for example, RSRP values quantized in 1 or 2 bits) in the RACH MSG3.

The gNB configures QCL for the UE (S206). For S206, either of the following two options may be applied.

### {Option 1}

The gNB configures one SSB as a QCL source RS.

### {Option 2}

The gNB configures a set of beam indices or SSBs as one QCL source instead of the index of one SSB. Measurement for a set of beams or SSBs may be performed.

### {Comparison with Existing NR}

The time domain and frequency domain locations of each SSB and the number of SSBs are the same as those in existing NR. The present disclosure is different from the existing NR in that mapping (association) of one SSB and a plurality of beams (or a plurality of SSBs corresponding to a plurality of beams) is permitted. Alternatively, the present disclosure is different from the existing NR in that mapping (association) of one SSB and a plurality of SSBs is permitted. The mapping may be configured for/indicated to the UE by higher layer signaling/physical layer signaling. The plurality of beams may be narrow beams described above. An SSB associated with a plurality of SSBs may be used as an SSB to be measured for beam searching.

The present disclosure and existing NR are the same in that the UE detects SSBs and initializes (transmits) a RACH in a resource corresponding to one SSB selected based on RSRPs and the like. The UE in the present disclosure monitors at least one SSB burst (this may be done across a radio frame boundary) and detects as many SSBs as possible (for example, aspect 3-2).

As additional information reported in a RACH procedure, the index of the best beam or information for deriving the index of the best beam (for example, a list of RSRPs of SSBs) may be included. When hybrid SSB transmission is applied, the UE may transmit (report) an SSB index transmitted by narrow beams, instead of a beam index.

A set of beam indices or SSBs (for example, SSBs corresponding to narrow beams) may be added as one QCL source instead of one SSB index. Measurement for a set of beams or SSBs may be performed.

### <Details of Aspects>

Detailed contents related to the aspects will be described in detail in comparison with existing NR. The following contents are detailed contents of or matters to be added to any of the embodiments.

### {Notification of K, M, and L}

### <<Option 1>>

For a UE, at least one of M, K, and L for determining the maximum number of supported beams may be defined in a specification. As described above, M denotes the number of all beams, L denotes the number of layers (depths/stages), and K denotes the number of beams (the number of beams to be measured) in each layer. L is determined based on the number of beams corresponding to one SSB.

### <<Option 2>>

A UE may receive (be configured/indicated with) information indicating at least one of M, K, and L by higher layer signaling/physical layer signaling. The UE may receive respective values of M, K, and L or an index indicating a combination of M, K, and L by using (modifying) at least one of a PSS/SSS, PBCH, and SIB1. The correspondence between the combinations and indices may be defined in a specification.

### <<Option 3>>

A UE need not be configured/indicated with M, K, and L when the UE reports an SSB list in MSG3 (for example, aspect 2-3).

### <<Option 4>>

The UE may receive an SSB transmission scheme in addition to M, K, and L when hybrid SSB transmission is applied (for example, aspect 2-2). In this case, the UE may be indicated with which of existing SSBs (for example, refer to FIG. 1A) and new SSBs (for example, refer to FIG. 1C) is used, by 1-bit information by using a PBCH or a modulated PSS/SSS. A range of indices of exiting SSBs/new SSBs may be notified by a PBCH/SIB1.

### {Notification of SSB Transmission Scheme}

### <<Option 1>>

An SSB transmission scheme is not notified. In this case, new SSB transmission is configured as a default transmission scheme. In other words, only new SSB transmission is used. In this case, hybrid SSB transmission may be supported or need not be supported.

### <<Option 2>>

A UE may receive 1-bit indication indicating whether to support new SSB transmission. This indication may be modulated as a PSS/SSS, or a PBCH or SIB1 may be used. When new SSB transmission is supported, hybrid SSBs may be supported or need not be supported.

### <<Option 3>>

A specific combination of M, K, and L (M = K, L = 1) may be configured, and this configuration may mean an existing SSB transmission scheme. Note that, although only new SSBs are supported, configuring the specific combination enables fallback to an existing SSB transmission scheme when a gNB does not have many beams.

### {UE Operation}

At least one SSB burst is monitored, at least one SSB having a sufficient RSRP (RSRP equal to or higher than a threshold) is detected, and further the RSRPs of all the received SSBs are recorded. By recording the RSRPs of all the SSBs, the UE can transmit a list of the RSRPs of the SSBs together with MSG3 as in aspect 2-3. When it is configured to report beam indices, a beam index detection algorithm may be used.

### {SIB1 Reception}

Similarly to NR, a UE may use the location related to each SSB for which decoding has been successful, for decoding of SIB1.

### {RACH Preamble}

### <<Option 1>>

Similarly to existing NR, a UE may transmit a RACH preamble (PRACH) corresponding to a selected SSB. The UE may use another RACH/RRC signaling signal for reporting of the best beam index and RSRPs. The UE selects one SSB for access to a network, and a gNB uses a beam pattern corresponding to this SSB until a narrow beam is reported, for communication.

### <<Option 2>>

A PRACH resource is associated with a beam index instead of an SSB index. A UE transmits a RACH preamble in the resource having a determined index of the best beam.

### <<Option 3>>

A UE may transmit a plurality of RACH preambles on PRACH resources associated with a plurality of respective detected SSBs. Preambles from one UE can use the same preamble root sequence (Cv) or a specific Cv pattern. Different UEs select preamble roots randomly. After PRACH transmission, the UE detects a random access response (RAR) at each of all corresponding locations where a PRACH has been transmitted.

### <<Option 4>>

A UE may modulate a bean index to a RACH preamble without modifying another part of a PRACH. In other words, a different RACH preamble may be transmitted according to a beam index.

### <<Option 5>>

In hybrid SSB transmission, PRACH resources are associated only with specific SSBs (for example, narrow beams corresponding to existing SSBs). A UE may transmit, after detecting the best SSB (SSB with the highest RSRP) from among the specific SSBs, a RACH preamble corresponding to the SSB.

### {Messages Other than RACH}

Pieces of Information transmitted in options 1 to 4 below are each transmitted, for example, in message 3 after a PRACH but may be transmitted in a PUCCH (UCI), PUSCH, or the like without being limited to message 3.

### <<Option 1>>

A UE may transmit the best beam index to a gNB in message 3.

### <<Option 2>>

A UE may transmit the RSRPs of all SSBs for which measurement has been performed or decoding (measurement) has been successful, to a gNB.

### <<Option 3>>

A UE may transmit the beam index or the RSRP of an SSB configured in another specific RRC signal, to a gNB.

### <<Option 4>>

In a case of hybrid SSB transmission, the UE may transmit the index of an SSB transmitted by narrow beams instead of the indices of the narrow beams, to a gNB.

### {QCL Assumption}

QCL assumption in RACH/RRC signaling will be described.

A UE may assume that, until the UE reports the beam indices or RSRP of an SSB set, a gNB uses, for communication with the UE, the same beam pattern as that related to a PRACH resource used for preamble transmission.

Alternatively, after the UE has reported the beam indices or RSRP of an SSB set, the UE assumes that the gNB uses, for communication with the UE, UE-dedicated narrow beams for subsequent channel/signal (for example, PUCCH/PUSCH) transmission.

### {QCL Resource}

### <<Option 1>>

A UE is configured with one SSB index as a QCL source RS.

### <<Option 2>>

A set of beam indices or SSBs, instead of one SSB index, is used as one QCL source.

### {Measurement}

When option 2 is applied to QCL resources, a plurality of configured SSBs may be measured, and RSRPs of beams, RSRQs of the beams, and SINRs of the beams may be measured/calculated in addition to the RSRPs of the SSBs, the RSRQs of the SSBs, and the SINR of the SSBs. The beams may be narrow beams or wide beams.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific
   processing/operation/control/information for at least one of the embodiments above
- supporting of a new SSB transmission scheme/best beam determination method (for example, FIG. 1C and FIGS. 2 to 4)
- supporting of values of M, K, and L

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling/disabling of a new SSB transmission scheme/best beam determination method (for example, FIG. 1C and FIGS. 2 to 4), any RRC parameter for a specific release (for example, Rel. 18/19), or the like.

When the UE does not support at least one of the specific UE capabilities above or is not configured with the specific information, operation of Rel. 15/16 may be applied, for example.

### (Supplementary Notes)

Regarding one embodiment of the present disclosure, the following supplementary notes of the invention will be given.

### {Supplementary Note 1}

A terminal including:
a receiving section that receives information indicating the number of all beams, the number of layers, and the number of beams in each layer; and
a control section that measures a synchronization signal block (SSB) corresponding to a set of a plurality of beams of each layer, and determines an index of a best beam, based on a measurement result.

### {Supplementary Note 2}

The terminal according to supplementary note 1, wherein
the control section compares received powers of a plurality of the SSBs in each layer, and determines the index of the best beam, based on the SSB with a high received power in the layer.

### {Supplementary Note 3}

The terminal according to supplementary note 1 or 2, wherein
the receiving section receives each beam included in the set of the plurality of beams, and
the control section detects pathloss of each of the beams.

### {Supplementary Note 4}

The terminal according to any one of supplementary notes 1 to 3, wherein
the receiving section receives indication indicating whether to support transmission of the synchronization signal block (SSB) corresponding to the set of the plurality of beams.

### (Supplementary Notes)

Regarding one embodiment of the present disclosure, the following supplementary notes of the invention will further be given.

### {Supplementary Note 1}

A terminal including:
a control section that measures a synchronization signal block (SSB) corresponding to a set of a plurality of beams of each layer, and determines an index of a best beam, based on a measurement result; and
a transmitting section that transmits a Physical Random Access Channel (PRACH) corresponding to the index of the best beam.

### {Supplementary Note 2}

The terminal according to supplementary note 1, wherein
the control section compares received powers of a plurality of the SSBs in each layer, and determines the index of the best beam, based on the SSB with a high received power in the layer.

### {Supplementary Note 3}

The terminal according to supplementary note 1 or 2, wherein
the receiving section receives each beam included in the set of the plurality of beams, and
the control section detects pathloss of each of the beams. {Supplementary Note 4}

The terminal according to any one of supplementary notes 1 to 3, wherein
the index of the best beam is used as a QCL source.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

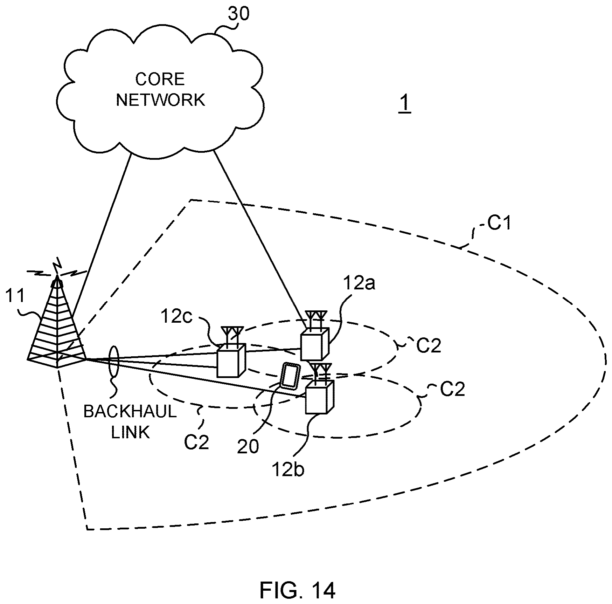

FIG. 14 is a diagram to show an example of a schematic structure of the radio communication system according to one embodiment. A radio communication system 1 (which may be referred to simply as a system 1) may be a system implementing communication using Long Term Evolution (LTE), 5th generation mobile communication system New Radio (5G NR) and so on the specifications of which have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and maintenance operation management (Operation, Administration and Maintenance (Management) (OAM)), for example. Note that one network node may provide a plurality of functions. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

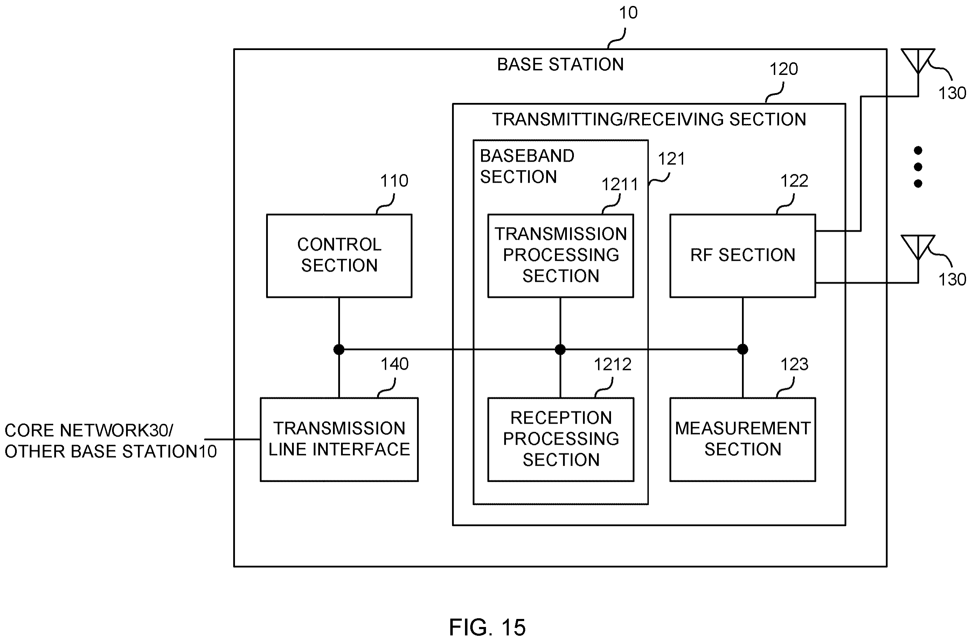

FIG. 15 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing an NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit information indicating the number of all beams, the number of layers, and the number of beams in each layer. The control section 110 may transmit a synchronization signal block (SSB) corresponding to a set of a plurality of beams of each layer, and control transmission, based on an index of a best beam determined based on a measurement result.

The control section 110 may control transmission of a synchronization signal block (SSB) corresponding to a set of a plurality of beams of each layer. The transmitting/receiving section 120 may receive a Physical Random Access Channel (PRACH) corresponding to an index of a best beam determined based on a measurement result of the SSBs.

### (User Terminal)

FIG. 16 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive information indicating the number of all beams, the number of layers, and the number of beams in each layer (corresponding to M, L, and K).

The control section 210 may measure a synchronization signal block (SSB) corresponding to a set of a plurality of beams of each layer, and determine the index of the best beam, based on a measurement result (refer to the first embodiment).

The control section 210 compares received powers of a plurality of the SSBs in each layer, and determines the index of the best beam, based on the SSB with a high received power in the layer (for example, refer to examples in FIG. 2 and FIG. 3).

The transmitting/receiving section 220 may receive each beam included in the set of the plurality of the plurality of beams. The control section 210 may detect pathloss of each beam (for example, refer to aspect 2-2).

The transmitting/receiving section 220 may receive indication indicating whether to support transmission of the synchronization signal block (SSB) corresponding to the set of the plurality of beams (refer to option 2 in {Notification of SSB Transmission Scheme}).

The transmitting/receiving section 220 may transmit a Physical Random Access Channel (PRACH) corresponding to the index of the best beam (aspect 2-1, option 2 in {RACH Preamble}).

The index of the determined best beam may be used as a QCL source.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

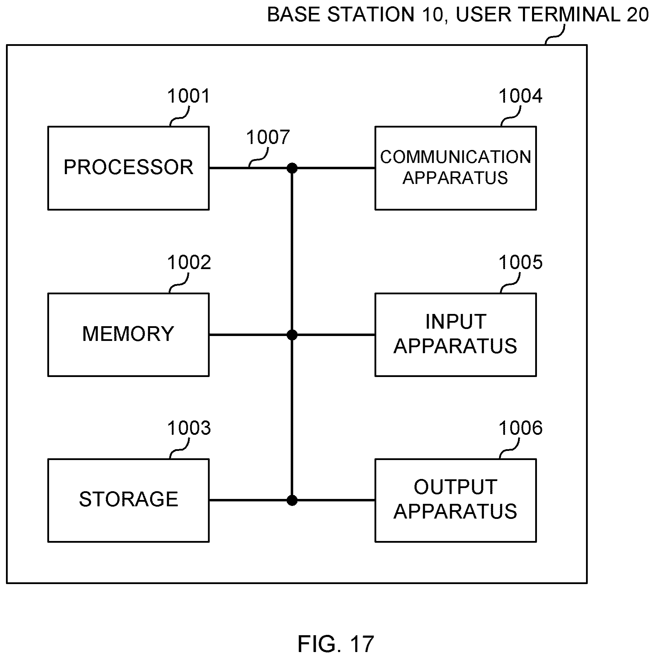

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit" "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

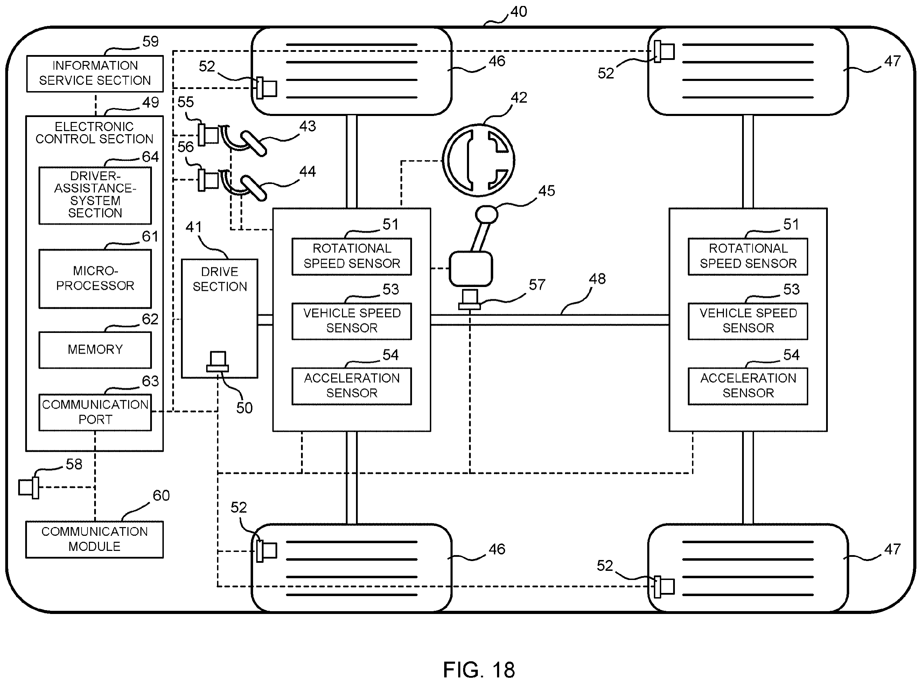

FIG. 18 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives information indicating the number of all beams, the number of layers, and the number of beams in each layer; and
a control section that measures a synchronization signal block (SSB) corresponding to a set of a plurality of beams of each layer, and determines an index of a best beam, based on a measurement result.

2. The terminal according to claim 1, wherein
the control section compares received powers of a plurality of the SSBs in each layer, and determines the index of the best beam, based on the SSB with a high received power in the layer.

3. The terminal according to claim 1, wherein
the receiving section receives each beam included in the set of the plurality of beams, and
the control section detects pathloss of each of the beams.

4. The terminal according to claim 1, wherein
the receiving section receives indication indicating whether to support transmission of the SSB corresponding to the set of the plurality of beams.

5. A radio communication method for a terminal, the radio communication method comprising:
receiving information indicating the number of all beams, the number of layers, and the number of beams in each layer; and
measuring a synchronization signal block (SSB) corresponding to a set of a plurality of beams of each layer, and determining an index of a best beam, based on a measurement result.

6. A base station comprising:
a transmitting section that transmits information indicating the number of all beams, the number of layers, and the number of beams in each layer; and
a control section that transmits a synchronization signal block (SSB) corresponding to a set of a plurality of beams of each layer, and controls transmission, based on an index of a best beam determined based on a measurement result.
